# EUROPEAN PATENT APPLICATION

(11) **EP 2 450 600 A1**
(43) Date of publication of application: **09.05.2012**
(21) Application number: 10794068.6
(22) Date of filing: 24.06.2010
(51) Int. Cl.: F16J 15/14, F16J 15/06, F16J 15/32

(54) **SEALING STRUCTURE FOR FITTING SECTION**

(30) Priority: 02.07.2009 JP 2009157395
(71) Applicant: Uchiyama Manufacturing Corp., Okayama-shi Okayama 702-8004 (JP)
(72) Inventor: YAMAMOTO, Hironori, Akaiwa-shi Okayama 701-2221 (JP); SHIBAYAMA, Masanori, Akaiwa-shi Okayama 701-2221 (JP); KIYOSHI, Teruyuki, Akaiwa-shi Okayama 701-2221 (JP)
(74) Representative: Sajda, Wolf E.
(86) International application number: PCT/JP2010/060773
(87) International publication number: WO 2011/001899

(57) **Abstract**

A sealing structure for a fitting portion where an annular member is concentrically fitted to a cylindrical member to be fitted at a cylindrical part of the annular member is disclosed.

The sealing structure is **characterized by** an elastic annular seal layer integrally provided on the backward end part of the annular member or the cylindrical member in fitting direction, by applying elastomeric agent to the backward end part and hardening it, and the elastic annular seal layer is formed such that it has layer thickness of 5 µm to 1 mm and is interposed in a compressed state between the annular member and the cylindrical member when the annular member is fitted to the cylindrical member.

## Description

### Technical Field

The present invention relates to a sealing structure for a fitting portion, for example, to a sealing structure for a fitting portion of a slinger constituting an oil seal and a rotary side member of a bearing device.

### Background Art

For example, in an automotive bearing device, a slinger of which a section is in the shape of the letter "L", having a cylindrical part and a flange part extending from one end of the cylindrical part, is fitted to a rotary side member (an inner ring member, a drive shaft, and the like) from the other end of the cylindrical part in such a manner that the cylindrical part is fitted; and an oil seal (a bearing seal) is incorporated, the oil seal being constructed in such a manner that a seal lip of a seal lip member fitted to the stationary side member (an outer ring member) via a core member elastically contacts the surface of the cylindrical part opposite to the fitting portion and one surface of the extending flange part.
In such a case, ingress of dirty water and the like into the bearing is prevented by an elastic contact of the seal lip to the slinger, or leakage of lubricant agent filled in the bearing is prevented.
However, the fitting portion of the slinger and the rotary side member and the fitting portion of the core member holding the seal lip member and the stationary side member adopt a metal-to-metal fitting, so that dirty water may enter the bearing because of processing accuracy of metal members and minute scratch on the surface.
When dirty water enters the bearing, the orbit surface of the bearing and the surface of a rolling element are scratched and the bearing performance is remarkably deteriorated. Patent Literatures 1 to 4 disclose that a seal member is provided for the slinger or a rotary shaft for preventing ingress of dirty water and the like through the fitting portion of the slinger, a drive shaft (the rotary shaft) or an inner ring.

### Citation List

### Patent Literature

- PTL 1 :: JP-H10-246 338 A
- PTL 2 :: JP-2006-125 483 A
- PTL 3 :: JP-2006-153 110 A
- PTL 4 :: JP-2008-180 277 A

### Summary of Invention

### Technical Problem

PTL 1 relates to an oil seal provided for a rotary shaft projecting a housing and discloses a packing, corresponding to the above-mentioned seal member, for sealing a fitting gap between a slinger and a rotary shaft. However, PTL 1 does not show clearly how the packing is mounted to the slinger or the rotary shaft. It is understood that the packing is mounted on the forward part in the fitting direction of the slinger to the rotary shaft because a seal ring having a seal lip is positioned on the atmospheric side.
Therefore, when the slinger is fitted to the rotary shaft, it is forecasted that the fitting resistance increases by the packing and fitting is not executed smoothly or a part of the packing enters a compression-fitting portion of the slinger and the rotary shaft to be broken.

PTL 2 relates to a seal for a wheel bearing device and discloses a shielding lip, corresponding to the above-mentioned seal member, provided for a rising plate part (flange part) of a slinger. This shielding lip is made of an elastic member such as rubber and so on and is integrally adhered by vulcanizing to the rising plate part. The shielding lip elastically contacts the end surface of the inner ring so as to prevent rain water and so on from entering the bearing or prevent rust at an exposed part of the inner ring from proceeding to a magnetic encoder attached to the slinger.
It is understood that the slinger is provided in a molding and the shielding lip is formed by vulcanization molding in which an adhesive agent is applied to a predetermined part and rubber and the like are injected thereon because the shielding lip is integrated to the slinger by vulcanization adhesion.
In case of vulcanization molding, the device becomes large, an application procedure of adhesive agent is required so that molding procedures become complex, and process cost increases. In addition, the shielding lip inevitably has a certain thickness and a certain size, so that it may be broken by the shear stress at the time of fitting when being interposed in the fitting portion between the slinger and the inner ring, thereby its sealing function cannot be adequately exerted.

PTL 3 relates to a bearing seal for a wheel bearing device and discloses an O-ring, corresponding to the above-mentioned seal member, which is interposed between a cylindrical part of a core member fixedly holding a cylindrical part of a slinger and a seal lip, and inner ring (rotary side member) or an outer ring (stationary side member). In such a case, an O-ring is easily obtained as a seal packing in the market and the sealing structure of the fitting portion can be easily constituted.
However, a circumferential groove for fitting is required to be provided on the inner ring and the outer ring because the O-ring is easily removed from the fitting portion. Even when the O-ring is fitted in the circumferential groove, if it is mounted to a part to which fitting pressure is largely operated, it may cause buckle by a shear stress.

PTL 4 relates to a sealing device for a wheel bearing (a bearing seal) and discloses a second seal layer, corresponding to the above-mentioned seal member, formed on a corner part from a cylindrical part to a flange part of a slinger for sealing between a cylindrical part of a second seal annular body (slinger) and an outer circumference of an inner ring. Although the second seal layer is disclosed to be formed by baking an elastic body such as rubber and the like to the slinger, a specific method is not described.
A stepped part is formed at an attached part of the second seal layer in the cylindrical part of the slinger so as to accommodate the second seal layer therein. Therefore, it is understood that the second seal layer interposed between the cylindrical part of the slinger and the inner ring does not become a compressed state and it is not clear that how much sealing performance is achieved between the slinger and the inner ring.

The present invention is proposed in view of the above-mentioned problems and has an object to provide a sealing structure for a fitting portion in which the structure is simplified, the sealing performance is superior, a sealing part hardly breaks at fitting, and the sealing performance is kept for a long time.

### Solution to the Problem

According to the present invention, a sealing structure for a fitting portion where a cylindrical part of an annular member is concentrically fitted to a cylindrical member to be fitted is **characterized in that** an elastic annular seal layer is integrally formed on a backward end part of the annular member or the cylindrical member in fitting direction by applying elastomeric agent to the backward end part and hardening it; and in that the elastic annular seal layer is formed such that it has a layer thickness of 5 µm to 1 mm and is interposed in a compressed state between the annular member and the cylindrical member when the annular member is fitted to the cylindrical member.

According to the present invention, an elastomeric agent with a viscosity equal to or higher than 20 Pa·S in an application process can be used as the elastomeric agent for forming the elastic annular seal layer, The annular seal layer can have a convex sectional shape, a plane chamfered sectional shape, a concave sectional shape, or a stepped cut sectional shape in its attached part.

Furthermore, according to the present invention, the annular member can be a slinger of a seal member and can comprise the cylindrical part and a flange part extending from one end of the cylindrical part, and an elastic contacting surface for a seal lip of the seal member can be formed at a surface of the annular member opposite to the fitting portion and at one surface of the flange part extending therefrom. In this case, the annular seal layer can be formed on the backward end part of the annular member in the fitting direction and a surface area which the seal lip does not contact can be formed at a surface opposite to an area where the annular seal layer is formed.

### Advantageous Effects of the Invention

According to the sealing structure for a fitting portion of the present invention, the cylindrical part of the annular member is concentrically fitted to the cylindrical member to be fitted. At the backward end part of the annular member in the fitting direction when the annular member is fitted, the elastic annular seal layer formed by applying and hardening the elastomeric agent is integrally formed, the annular seal layer is interposed in a compressed state between the annular member and the cylindrical member in such a fitting state, thereby the fitting portion of the annular member and the cylindrical member is sealed.
In particular, when the annular member and the cylindrical member are made of metal, superior sealing performance can be exerted without being adversely affected by processing accuracy and minute scratch on the fitting surface.

At the backward end part of the annular member or the cylindrical member in the fitting direction, the elastic annular seal layer formed by applying and hardening the elastomeric agent is integrally formed, so that the shear stress applied to the elastic annular seal layer between the fitting members at the time of fitting becomes small and a fracture of the elastic annular seal layer at the time of fitting is reduced.
In addition, the annular seal layer is designed to have a layer thickness of 5 µm to 1 mm, so that a preferable sealing performance can be obtained and there is no fear of such a fracture at the time of fitting. When the layer thickness is less than 5 µm, the sealing performance tends to be deteriorated by being affected by processing accuracy and minute scratch on the surface of the fitting members. When the layer thickness is higher than 1 mm, the shear stress at the time of fitting strongly operates and fracture is easily caused.

Because the annular seal layer is formed by applying and hardening the elastomeric agent, the layer thickness can easily be made thin as mentioned above. A large-scale molding device and application of adhesive agent, which are required for adhesion by vulcanizing, are not required, therefore, an annular member can be obtained easily without increasing process cost. When the viscosity of the elastomeric agent for forming the elastic annular seal layer is 20 Pa·S or higher at the time of application, the elastic annular seal layer can be accurately formed in desired shape.
When the elastomeric agent is applied and hardened by a dispenser method and the viscosity of the elastomeric agent is less than 20 Pa·S, the elastomeric agent may flow (drop) before being hardened, or the elastomeric agent may cause a sticky-string phenomenon when the application is stopped and a nozzle is removed from an applied part, as a result the hardened elastic annular seal layer sometimes does not become a desired shape.

The sectional shape of the part where the annular seal layer is formed can be convex, planely chamfered, concave or in the shape of step by cutting. Because of such a configuration, the application area on the annular seal layer is effectively secured. When it is concave or in the shape of step by cutting, the application stability of the annular seal layer increases.
Even if the layer thickness increases, the shear stress is not strongly operated and the risk of fracture of the annular seal layer can be more reduced at the time of fitting. In particular, when the annular seal layer is in the shape of a step by cutting, relief of the annular seal layer at the time of fitting is secured and fracture of the annular seal layer is reduced.

The annular member can be the slinger comprising the cylindrical part and the flange part extending from one end of the cylindrical part and the surface of the annular member opposite to the fitting portion and one side of the flange part extending therefrom can be formed as the elastic contacting surface of the seal lip constituting the seal member. In such an embodiment, for example, when the slinger is fitted to the rotary side member and the core member integrally holding the seal lip is fitted to the stationary side member, an oil sealing structure for preventing leakage of oil can be constructed.
In addition, when the annular seal layer is formed at the backward end part of the annular member, namely a slinger, in the fitting direction, a preferable sealing state can be kept at the fitting portion with the rotary side member and ingress of dirty water and the like to the fitting portion can be accurately prevented.
In such a case, the surface opposite to the part, where the annular seal layer is provided, of the annular member is formed as a surface area which the seal lip does not elastically contact, release of friction heat by elastic sliding contact of the seal lip is not hindered and deterioration of the seal lip by the friction heat can be controlled.

### Brief Description of the Drawings

- Fig. 1: is a vertical sectional view of a bearing device in which a sealing structure for a fitting portion is applied according to one embodiment of the present invention.
- Fig. 2: is an enlarged view of area "A" in Fig. 1.
- Fig. 3: is an enlarged view of area "B" in Fig. 1.
- Fig. 4a and Fig. 4b: are similar views to Fig. 3 and show modification of area "B" in Fig. 2.
- Fig. 5a and Fig. 5b: are similar views to Fig. 3 and show another modification of area "B" in Fig. 2.
- Fig. 6a: is an enlarged view of area "C" in Fig. 2 and
- Fig. 6b: is a similar view showing its modification.
- Fig. 7: is a similar view to Fig. 2 showing a bearing device in which a sealing structure for a fitting portion is applied according to another embodiment of the present invention and further shows an enlarged view of an essential part.
- Fig. 8: is a similar view to Fig. 1 showing a bearing device in which a sealing structure for a fitting portion is applied according to another embodiment of the present invention and further shows an enlarged view of an essential part.
- Fig. 9a, Fig. 9b and Fig. 9c: are similar views to the enlarged view in Fig. 8 and show several examples of the modification in Fig. 8.
- Fig. 10: is a schematic sectional view in which a sealing structure for a fitting portion according to the present invention is applied to an oil seal part of the bearing device in Fig. 8 and further shows an enlarged view of the essential part.
- Fig. 11: is a similar view to Fig. 10 and shows modification of the embodiment.
- Fig. 12: is a similar view to Fig. 10 and shows another modification of the embodiment.
- Fig. 13a: corresponds to the enlarged view in Fig. 8 and shows other embodiment in which a sealing structure for a fitting portion according to the present invention is applied to a cap mounting part of the bearing device in Fig. 8, and
- Fig, 13b: shows its modification.
- Fig. 14: is a similar view to Fig. 10 and shows another modification of the embodiment in Fig. 10.
- Fig. 15: is a table showing the relation of the viscosity of the elastomeric agent and the evaluation of moldability when the elastic annular seal layer is formed using the elastomeric agent.

### Description of Embodiments

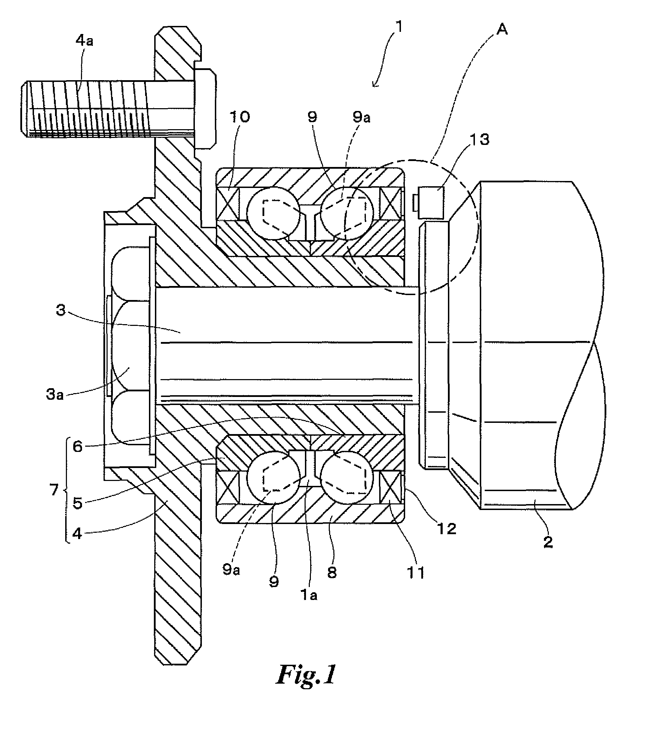

Embodiments of the present invention are explained referring to the attached drawings. Fig. 1 shows a bearing device for an automotive wheel (drive wheel) suspension to which a sealing structure for a fitting portion of the present invention is applied. In a bearing device 1 shown in Fig. 1, an automotive drive shaft 3 is coupled with a uniform joint 2, a wheel hub 4 is integrally spline-fitted to the outer circumference of the drive shaft 3, and the wheel hub 4 is prevented from being removed by a nut 3a. A tire wheel (wheel), not shown, is attached to the wheel hub 4 via a bolt 4a.
Two-part type inner ring members 5, 6 are fitted to the outer circumference of the wheel hub 4 and the wheel hub 4 and the inner ring members 5, 6 constitute an inner ring 7 as a rotary side member. The reference numeral 8 indicates an outer ring as a stationary side member and is integrated with an automotive body (not shown). Two rows of rolling elements (balls) 9 ... are interposed while being held with a retainer 9a between the outer ring 8 and the inner ring 7 (the wheel hub 4, the inner ring members 5, 6).
At both ends between the inner and outer rings 7, 8 along the axial direction of the drive shaft 3, bearing seals (oil seal) 10, 11 are interposed as a seal member for preventing leakage of lubricant grease or ingress of dirty water, dust and the like while keeping mutual sliding contact relation, thereby constituting an angular type bearing device 1. The space defined by the inner and outer rings 7, 8 and the bearing seals 10, 11 at both ends constitutes the bearing space 1a including the orbit surface of the rolling elements 9···,

The bearing seals 10, 11 as mentioned above are designed to be a pack seal type and their basic structures are similar. However, a magnetic encoder 12 is provided at the outer end surface of the automotive body side bearing seal 11 (surface on the automotive body side) and the magnetic encoder 12 and a magnetic sensor 13 correspondingly provided on the body side constitute a rotation detection device of a tire wheel. The magnetic encoder 12 is a multi-polar magnetic ring constituted of a rubber ring which is molded by mixing magnetic powder in rubber material and S-poles and N-poles are alternately provided along the circumferential direction so as to be magnetized.

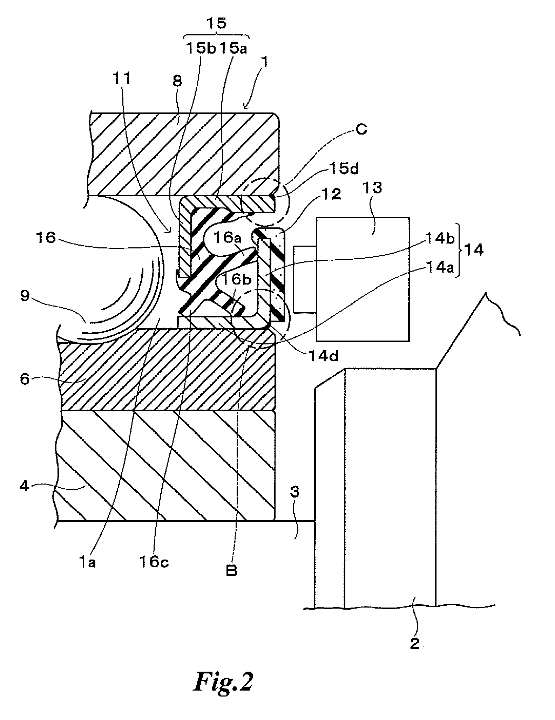

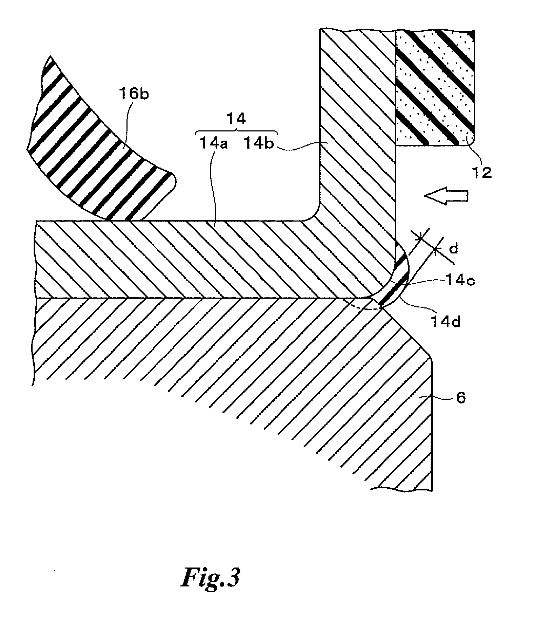

The structure of the bearing seal 11 is explained referring to Fig. 2 and Fig. 3. The wheel side bearing seal 10 is different from the body side bearing seal 11 in that the magnetic encoder 12 is not provided, so the explanation of the bearing seal 10 is omitted here.
The bearing seal 11 comprises a slinger (annular member) 14 having a cylindrical part 14a which is fitted and integrated to the outer circumference of the inner ring member (member to be fitted) 6 and an outward flange part 14b extending from one end of the cylindrical part 14a, a core member (annular member) 15 having a cylindrical part 15a which is fitted and integrated to the inner circumference of the outer ring 8 and an inward flange part 15b extending from one end of the cylindrical part 15a, and an elastic seal lip member 16 having a plurality of seal lips 16a, 16b, 16c which are integrally fixed to the core member 15 and elastically contact the inner surface of the slinger 14 (surface on the bearing space 1a side).
The magnetic encoder 12 constituted of a rubber ring body is integrally formed by vulcanizing adhesion to the surface of the slinger 14 opposite to a bearing space 1a (the surface, opposite to a bearing space 1a, of the slinger), namely the automotive body side surface.

An annular seal layer 14d formed by applying and hardening an elastomeric agent is provided at an external corner part 14c of one end of the cylindrical part 14a of the slinger 14 and the extending base part of the outward flange part 14b extending from the one end of the cylindrical part 14a as shown in Fig. 3. The surface of the external corner part 14c constitutes a part where the annular seal layer 14d is formed and its sectional shape is convex as shown in the figure.
The cylindrical part 14a of the slinger 14 is fitted and integrated to the outer circumference of the inner member 6 along an outlined arrow as shown in the figure. Accordingly, the annular seal layer 14d is positioned at the backward end part in fitting direction when the slinger 14 is fitted.
When the slinger 14 is fitted to a predetermined position of the inner ring member 6, a part of the annular seal layer 14d is interposed in a compressed state between the cylindrical part 14a of the slinger 14 and the automotive body end part of the inner ring member 6. A two-dotted line in Fig. 3 shows the original shape of the annular seal layer 14d and the figure shows the original shape is deformed by compression. The two-dotted lines in other figures show the original shape of the annular seal layer.

While the slinger 14 and the inner ring member 6 are fitted, a part of the annular seal layer 14d is interposed in a compressed state in the fitting portion at the backward end part in the fitting direction, so that the space between both fitting surfaces in the fitting portion is sealed and outside dirty water and the like are prevented from entering the space. Accordingly, even if there is processing tolerance or the fitting surfaces have minute scratches when metal members are fitted, ingress of dirty water and the like into the fitting portion is prevented by the annular seal layer 14d, thereby reducing rust of the fitting surfaces.
In addition, when the slinger 14 and the core member 15 are combined as shown in the figure, the seal lips 16a, 16b, 16c of the elastic seal lip member 16 integrally fixed to the core member 15 elastically contact the surface on the bearing space side of the slinger 14, namely the outer circumference of the cylindrical part 14a and the surface of the flange part 14b opposite to the encoder 12. When the drive shaft 3 axially rotates, the seal lips 16a, 16b, 16c slidably and relatively contact the elastic contacting surfaces.
Therefore, dirty water is prevented from entering the bearing space 1a by interaction effects of dirty water prevention function of the annular seal layer 14d and the elastically contacting seal function of the seal lips 16a, 16b, 16c to the slinger 14, thereby achieving long life of the bearing device 1. The surface of the slinger 14 opposite to the attached part of the annular seal layer 14d (surface on the bearing space 1a side) is an area which any one of the seal lips 16a, 16b, 16c does not elastically contact, so that deterioration of seal lip is not advanced without accumulating friction heat caused by elastic contact.

The annular seal layer 14d is formed by applying the elastomeric agent and hardening it. Two-component-hardening type silicone elastomer, one-component-hardenable type silicone elastomer, or one-component-hardening type phlorosilicone elastomer are used as the elastomeric agent. These elastomeric agent is liquid and is discharged and applied to a predetermined portion, namely the external corner 14c, by a dispenser and the like while the slinger 14 as a work axially rotates, and is hardened according to predetermined hardening conditions, thereby obtaining the annular seal layer 14d.
The two-component-hardening type silicone elastomer can be hardened at room temperature in a short time and is superior in operation performance. The one-component-hardening type silicone is required to be hardened by heat or by moisture, so that the operation performance is inferior than the two-component-hardening type silicone elastomer; however, the usable time is long and the one-component-hardening type silicone is advantageous in storage.
In addition, the one-component-hardening type phlorosilicone elastomer is required to be hardened by heat or moisture, is inferior in the operation performance to the two-component-hardening the silicone elastomer and is expensive; however, the usable time is long and the one-component-hardening type phlorosilicone elastomer is advantageous in storage, in addition it is superior in heat resistance and oil resistance.

In addition to the above-mentioned elastomeric agent, any component which can form the elastic seal layer 14d by applying and hardening can be appropriately and selectively applied considering the availability such as property and so on. The above-mentioned elastomeric agent is appropriately and selectively applied considering the application operationability, performance, cost, and so on generally. More specifically, the preferable hardened elastomer has: a hardness of Shore A: 20 to 90 (preferably 20 to 70), a tensile strength of 0.3 MPa or higher, and a stretch of 100 % or higher. In the present invention, an elastomeric agent is selected in view of performance such as heat resistance, low-temperature resistance, water resistance, ozone resistance, chemical resistance, thermal shock resistance, and so on.

When the above-mentioned elastomeric agent is applied and hardened, the layer thickness (film thickness), the size (width) and the like of the elastic seal layer 14d are controlled by changing the nozzle diameter and discharge amount of the dispenser and the rotary speed of the slinger 14. When the elastomeric agent is baked and hardened by heating, the deformation shape is changed by drip of applied elastomeric agent by changing the time from application to baking of the agent, so that the layer thickness "d", the size and the like of the elastic seal layer 14d are controlled by changing the time.

### Experimental Example 1

The metal slinger 14 and the inner ring member 6 which were fitted as shown in Fig. 3 were prepared, one-coinponent-hardening silicone elastomer was discharged and applied by a dispenser to the external corner part 14c of the slinger 14 and was hardened by baking for 10 minutes at 150 degrees centigrade, and the annular seal layer 14d with a thickness of 0.02 to 0.10 mm (mainly 0.04 mm) was formed. Then the slinger 14 was fitted to the inner ring member 6 as shown in Fig. 3.
The fitting interference (radius value) was 0.02 to 0.15 mm. Scratch with depth of 0.02 mm along the axial direction was made on the fitting portion of the inner ring member 6, and the slinger 14 was similarly fitted in the same manner. When the fitting structure with scratch and one without scratch were rendered in an air leak experiment under pressurized environment, no air leak was caused even when the inner pressure was increased to no more than 0.4 MPa.

### Comparison Example

The same slinger 14 and the inner ring member 6 as the experimental example were prepared, the slinger 14 without having the annular seal layer 14d was fitted to the inner ring 6 without having scratch on the outer circumference, and to the inner ring member 6 with the same scratch as in the experimental example, and the same airleak experiment was executed. In case of the inner ring member 6 without scratch, air leak was shown around the inner pressure of 0.3 MPa, and in case of one with scratch, air leak was shown at the inner pressure of 0.1 MPa or less.

As shown in the results of Experimental Example and Comparison Example, it is understood that the sealing performance in the fitting portion between the slinger 14 and the inner ring member 6 is remarkably superior when the annular seal layer 14d is formed. It was found by repeating the air leak experiments that the layer thickness "d" is preferably 6 µm to 1 mm, When it is less than 5 µm, the sealing performance tends to be deteriorated by the effect of the processing accuracy of the fitting member and minute scratch on the surface thereof. When it exceeds 1 mm, the shear stress at the time of fitting strongly acts and fracture was easily caused.

### Experimental Example 2

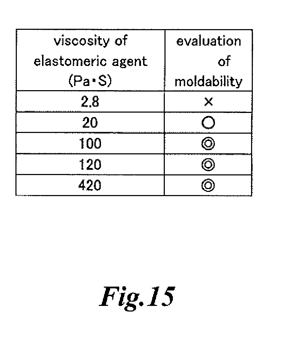

Elastomeric agents with different viscosities were prepared, discharged and applied on an experimental piece by a dispenser, and the evaluation test was executed on the moldability of the annular seal layer in the process of hardening. Fig. 15 is a table of the evaluation test results. In Fig. 15, the moldability was visually evaluated based on whether the elastomeric agent flowed or not when the elastomeric agent was applied to a standing experimental piece, and whether sticky string was caused or not after the dispenser stops application and the nozzle was detached from the applied part.
In the column of moldability evaluation, "×" indicates the flow and sticky string were shown and the annular seal layer became non-uniform enough to deteriorate the sealing ability. "○" indicates the flow and sticky string were slightly shown, however, the annular seal layer obtained an expected sealing performance. "⊚" indicates the flow and sticky string were not shown and the annular seal layer was formed in an expected uniform condition along the circumferential direction. It is understood from Fig. 15 that the viscosity of the elastomeric agent at application is preferably 20 Pa·S or above, and more preferably 100 Pa·S or above.

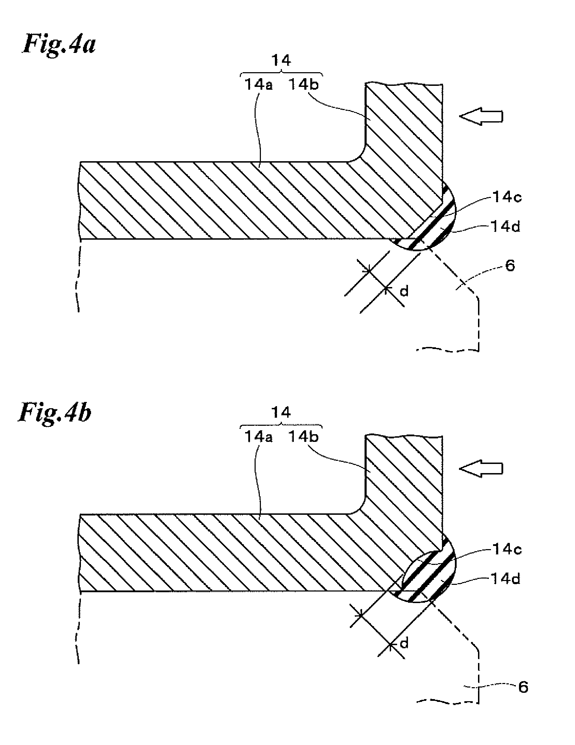

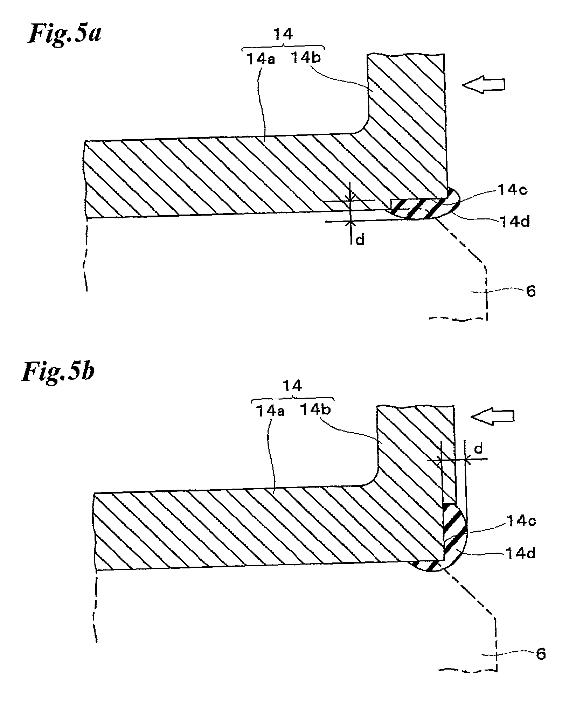

Fig. 4a, Fig. 4b, Fig. 5a and Fig. 5b are modified configuration examples of the annular seal layer 14d.
The sectional shape of the external corner part 14c where the annular seal layer 14d is formed is planely chamfered in the embodiment of Fig. 4a, and the sectional shape of the external corner part 14c is in the shape of concave in the embodiment of Fig. 4b. When the external corner part 14c is formed as shown in the figures, the layer thickness "d" at the center of the annular seal layer 14d is made thicker than that in Fig. 3. The slinger 14 is also fitted to the inner ring member 6 along the direction shown with the outlined arrow.
When the layer thickness "d" at the center is made thick, relief of a part of the annular seal layer 14d interposed in the fitting portion (overlapped part with the inner ring member 6) at the time of fitting increases and the compressed elastic deformation is easily exerted. In case of the shape as shown in Fig. 4b, the application stability of the annular seal layer 14d increases, the shear stress does not strongly operate because of the relief function even when the layer thickness "d" is large, thereby reducing fear of fracture of the annular seal layer 14d at the time of fitting.

In the embodiment shown in Fig. 5a and Fig. 5b, the sectional shape of the external corner part 14c is cut in the shape of step and the annular seal layer 14d is formed on the stepped part. The stepped part is formed so as to have a step difference in the axial center direction of the cylindrical part 14a in Fig. 5a and it is formed so as to have a step difference along the extending direction of the flange part 14b (orthogonal to the axial center direction of the cylindrical part 14a) in Fig. 5b.
In these embodiments, the relief of the annular seal layer 14d at the time of fitting is secured in addition to the fact that the application stability of the annular seal layer 14d increases, thereby reducing fracture of the annular seal layer 14d. The outlined arrows in Fig. 5a and Fig. 5b show the fitting direction of the slinger 14 to the inner ring member 6.

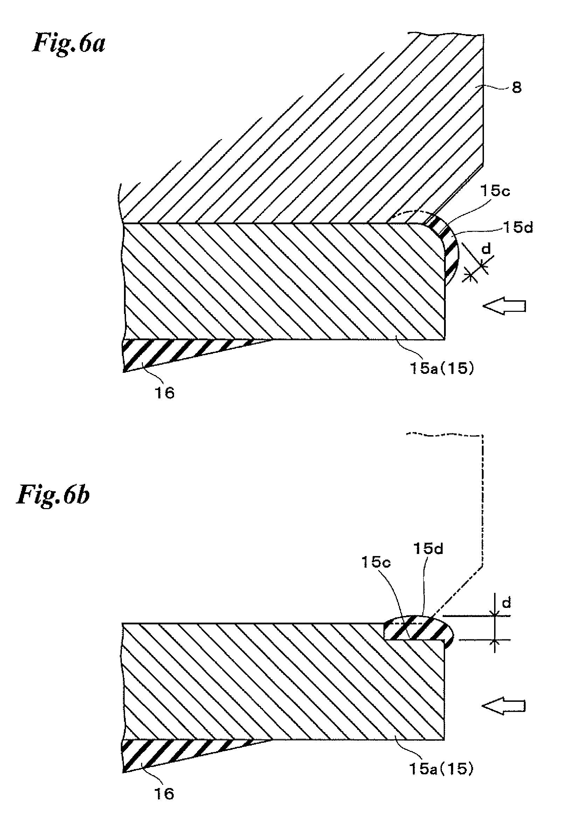

Fig. 6a is an enlarged view of "C" in Fig. 2 and Fig. 6b is its modification, In these figures, the present invention is applied to a fitting portion of the core member (annular member) 15 and the outer ring (member to be fitted) 8.
The cylindrical part 15a of the core member 15 integrally fixing the seal lip member 16 is fitted to the inner circumference of the outer ring 8 in the direction of the outlined arrow. In Fig. 6a, the sectional shape of a backward outer circumferential part 15c of the cylindrical part 15a of the core member 15 in the fitting direction is convex and an annular seal layer 15d is formed on the convex part.
The annular seal layer 15d is formed by applying elastomeric agent and hardening it so as to have a predetermined layer thickness "d" as mentioned above. The annular seal layer 15d is interposed in the fitting portion of the outer ring 8 and the core member 15 while a part of the annular seal layer 15d is compressed (two-dotted line) when the core member 15 is fitted in the direction along the outlined arrow. Therefore, the fitting portion of the outer member 8 and the core member 15 is sealed and dirty water and the like are prevented from entering therethrough into the bearing space 1a (refer to Fig. 1 and Fig. 2) from outside.

In Fig. 6b, the backward outer circumferential part 15c where the annular seal layer 15d is formed is sectionally cut in the shape of a step and the annular seal layer 15d is formed on the stepped part. In this embodiment, the application stability of the annular seal layer 15d increases, and further the relief of the annular seal layer 15d at the time of fitting is secured like the embodiment in Fig. 5a, thereby reducing fracture of the annular seal layer 15d.
How the annular seal layer 15d is formed is not limited to the exemplified embodiment and it may be formed like the one in Fig. 4a, Fig. 4b, or Fig. 5b.

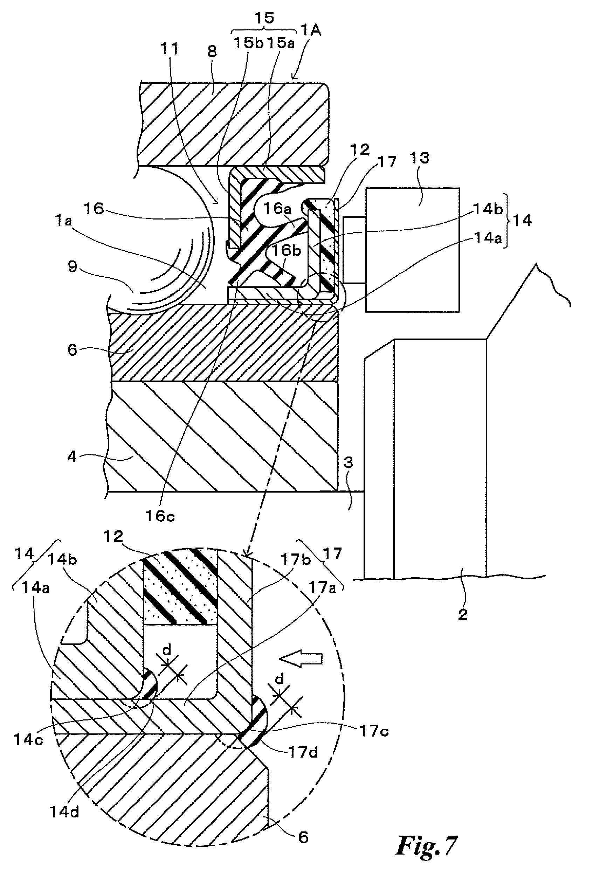

Fig. 7 shows an embodiment of a bearing device in which a sealing structure for a fitting portion of another embodiment of the present invention is applied. The slinger 14 is fitted to the inner ring member 6 via a protective cover 17 of the encoder 12 in a bearing device 1A in this embodiment. The protective cover 17 comprises a cylindrical part 17a fitted to the outer circumference of the inner ring 6 and a flange part 17b extending from one end of the cylindrical part 17a (backward end part in the fitting direction along the outlined arrow).
The flange part 17b is positioned so as to cover the surface of the encoder 12 and functions to prevent an adverse effect of dust and the like to the encoder 12 and to protect the encoder 12 from damage. The cylindrical part 14a of the slinger 14 is externally fitted onto the cylindrical part 17a of the protective cover 17. Therefore, the protective cover 17 is defined as an annular member in relation to the inner ring member 6 and is defined as a member to be fitted in relation to the slinger 14.

The annular seal layer 14d of a predetermined layer thickness "d" is formed on the external corner part 14c constituting an extending base part of the flange part 14b of the slinger 14. A part of the annular seal layer 14d is interposed in a compressed state in the fitting portion between the protecting cover 17 and the slinger 14 when they are fitted. An annular seal layer 17d is formed by applying the elastomeric agent and hardening it as mentioned above at an external corner part 17c of one end of the cylindrical part 17a of the protective cover 17 and the extending base part of an outward flange part 17b extending from the one end.
In such a case, the annular seal layer 17d is formed, the sectional shape is convex in the figure, and the annular seal layer 17d is formed on the external corner part 17c on the external corner part 17c so as to have a predetermined layer thickness "d". The cylindrical part 17a is fitted to the outer circumference of the inner ring member 6 as the member to be fitted and a part of the annular seal layer 17d (two-dotted line) is interposed in the fitting portion thereof in a compressed state.
Accordingly, the fitting portion of the inner ring member 6 and the protective cover 17 is sealed and dirty water and the like are prevented from entering the bearing space 1a through the fitting portion. The fitting portion of the protective cover 17 and the slinger 14 is sealed by the annular seal layer 14d, so that dirty water and the like are also prevented from entering the bearing space 1a through the fitting portion.

The annular seal layers 14d, 17d in this embodiment can be formed like the embodiment in Fig. 4a, Fig. 4b, Fig. 5a or Fig. 5b. The sealing structure as shown in Fig. 6a and Fig. 6b can be adopted in the fitting portion of the core member 15 and the outer ring 8. Other structures are the same as those in Fig. 2, so the same reference numerals are allotted to the common members and their explanation is omitted here.

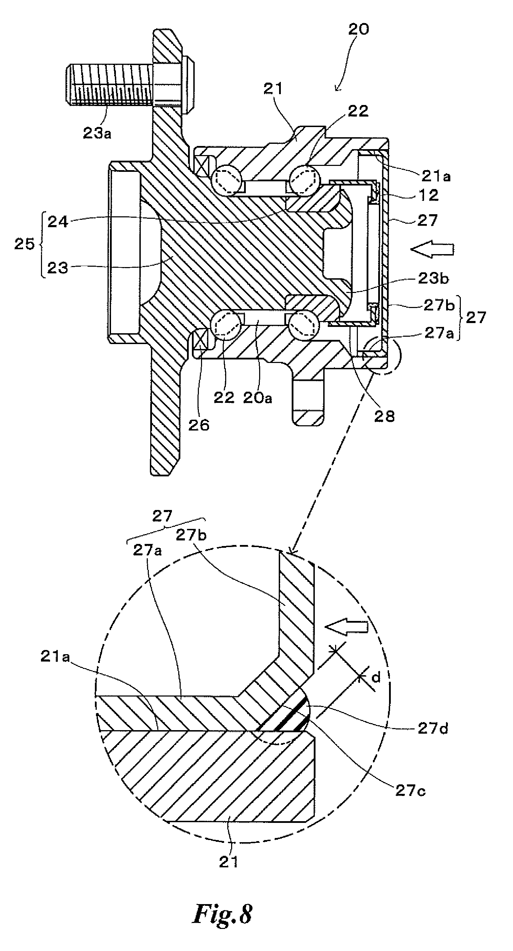

Fig. 8 shows an embodiment in which a sealing structure for a fitting portion of the present invention is applied to a portion other than the bearing seal of the bearing device 20 which is different from the bearing devices 1, 1A. The bearing devices 1, 1A support a drive wheel of an automobile; however, the bearing device 20 in this embodiment supports a driven wheel of an automobile. A wheel hub 23 and an inner ring member 24 are supported in an axially rotatable manner to the inner circumference of an outer ring 21 fixed to an automotive body (not shown) via two-row rolling elements (ball) 22···.
The wheel hub 23 is attached with a driven wheel (tire wheel), not shown, with a bolt 23 a. The wheel hub 23 and the inner ring member 24 constitute an inner ring 25 being the rotary side, and the rolling elements 22··· are interposed between the outer ring 21 and the inner ring 25 while being held with a retainer 22a.
A bearing seal (oil seal) 26 of axial seal type is fitted to the wheel side end part of the outer ring 21 and the inner ring 25 along the axial center direction of the wheel hub 23 while keeping mutual slidably contacting relation. A cap 27 to be explained later is fitted at the automotive body side end part of the outer ring 21 and the angular type bearing device 20 is constituted.
The space defined by the outer ring 21, the inner ring 25, the bearing seal 26 and the cap 27 constitutes a bearing space 20a including the orbit surface of the rolling elements 22···. Leakage of lubricant grease filled in the bearing space 20a and ingress of dirty water, dust and the like into the bearing space 20a are prevented by the bearing seal 26 and the cap 27.

The inner ring member 24 is fitted to the wheel hub 23 from the automotive body side, and removal prevention and pre-compression as a bearing are exerted by enlarging and caulking the automotive body side end part 23b of the wheel hub 23. For this purpose, the automotive body side end part of the outer ring 21 is opened, the cap member 27 is fitted and attached to the opening (inner circumference) 21 a of the outer ring 21 after fitting and attaching the inner ring member 24, and ingress of dust and dirty water is prevented from entering the fitting portion of the outer ring 21 and the inner ring 25.
The cap member 27 comprises a cylindrical part 27a fitted to the inner circumference 21 a of the outer ring 21 and a cover plate part 27b which extends from one end of the cylindrical part 27a (the backward end part in the fitting direction along the outlined arrow) and closes the opening of the cylindrical part 27a. In the fitting relation of the cap member 27 and the outer ring 21, the former corresponds to the annular member of the present invention, and the latter corresponds to the member to be fitted in the present invention.

A ring 28 with an "L" shaped section for supporting the encoder is fitted to the outer circumference of the inner ring member 24 and the same magnetic encoder 12 as mentioned above is adhered and integrated to the automotive body side of the ring 28. The cap 27 is fitted to the outer ring 21 so as to cover the magnetic encoder 12. A magnetic sensor, not shown, is provided adjacent to the magnetic encoder 12 outside the cap 27 and a rotation detection device for wheels is constituted as mentioned above. The cap 27 has a cover function for protecting the magnetic encoder 12 and prevents damage of the magnetic encoder 12 by dust and so on.

On the external corner part 27c of the cap member 27 at the extending base part of one end of the cylindrical part 27a and the cover plate part 27b, an annular seal layer 27d is formed with a predetermined layer thickness "d" by applying the elastomeric agent and hardening it as mentioned above. The annular seal layer 27d is formed on the external corner part 27c which has a planely chamfered sectional shape in the figure.
When the cap member 27 is fitted and attached to the opening 21a of the outer ring 21, a part of the annular seal layer 27d (two-dotted line) is interposed in a compressed state at the fitting portion thereof, thereby the fitting portion is sealed and ingress prevention function of dust and dirty water by the cap 27 is ensured.

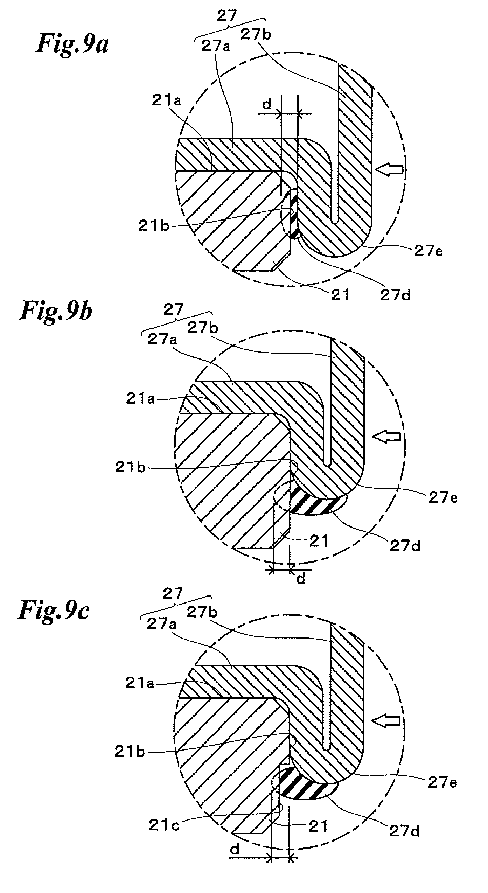

Fig. 9a, Fig. 9b and Fig. 9c show several modifications of the embodiment shown in Fig. 8. In these modifications, the extending base part of the cylindrical part 27a and the cover plate part 27b of the cap member 27 is a folded part 27e and the annular seal layer 27d is formed on the folded part 27e. The folded part 27e is designed in the form of outward flange, when the cap member 27 is fitted to the opening 21 a of the outer ring 21 along the direction of the outlined arrow, the folded part 27e in the form of flange is designed to abut an automotive body side end surface 21b of the outer ring 21.
The annular seal layer 27d is interposed in a compressed state between the abutted parts, which constitute a part of fitting portion of the outer ring 21 and the cap member 27. In Fig. 9a, the annular seal layer 27d is formed on the flat part of the folded part 27e, so that the entire annular seal layer 27d is compressed when the outer ring 21 and the cap member 27 are fitted, thereby securing sealing therebetween; however, the compression reaction force increases.
In the embodiments in Fig. 9b and Fig. 9c, the annular seal layer 27d is formed on a curved part of the folded part 27e, so that relief by compression is secured and the compression reaction force is reduced. Specifically in Fig. 9c, a stepped part 21c is formed at the automotive body side end surface 21b of the outer ring 21 and the elastic seal layer 27d is constituted so as to elastically contact the stepped part 21c, so that the compression reaction force further reduces.

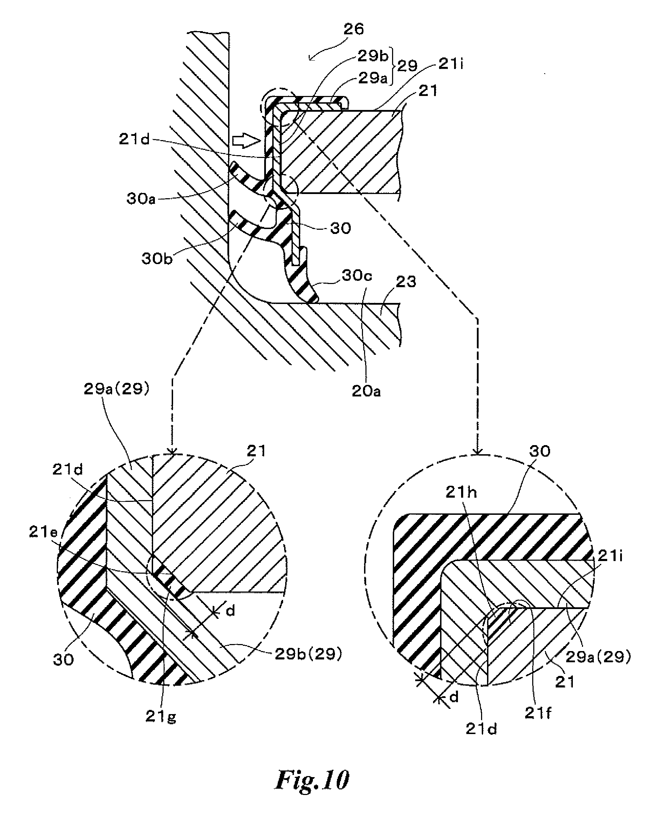

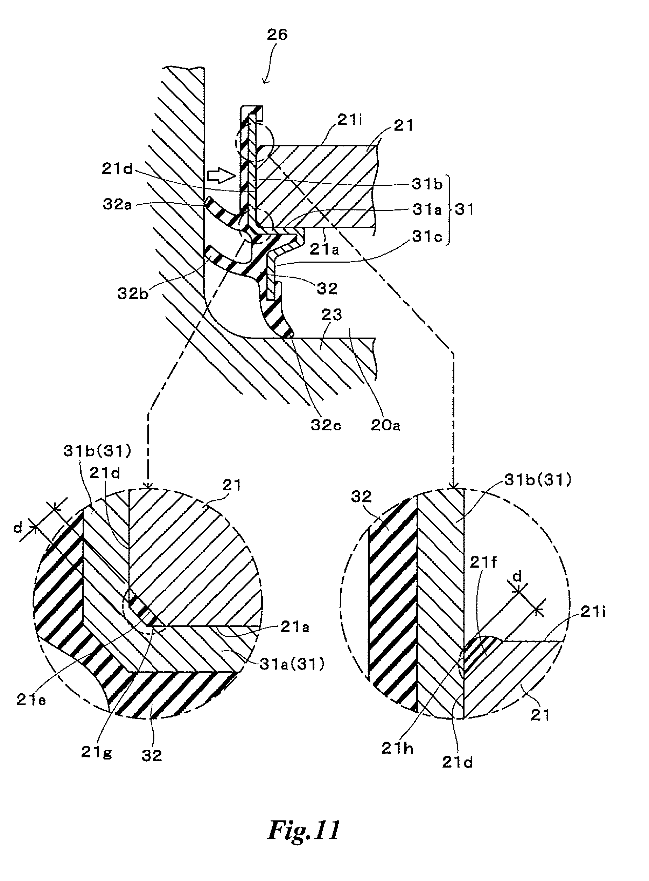

Fig. 10 to Fig. 13 show embodiments in which the annular seal layer is formed on the member to be fitted. Embodiments in Fig. 10 and Fig. 11 are applied, for example, to the bearing seal (oil seal) 26 shown in Fig. 8. The bearing seal 26 in Fig. 10 is a so-called axial seal type bearing seal, and has a core member 29 fitted to an outer circumference 21i of the outer ring 21 and an elastic seal lip member 30 having a plurality of seal lips 30a, 30b, 30c which elastically contact the wheel hub 23 and being integrally fixed to the core member 29.
The core member 29 comprises a cylindrical part 29a fitted to the outer circumference 21i of the outer ring 21 along the direction of the outlined arrow and an inward flange part 29b extending from the backward end part of the cylindrical part 29a in the fitting direction to the centripetal direction.
The inward flange part 29b is formed so as to abut a wheel side end surface 21d of the outer ring 21 when the core member 29 is fitted to the outer ring 21. In the fitting relation of the core member 29 and the outer ring 21, the former corresponds to the annular member of the present invention and the latter corresponds to the member to be fitted of the present invention.

The inside corner 21e and the outside corner 21f of the wheel side end surface 21 d of the outer ring 21 are planely chamfered and are provided with annular seal layers 21 g, 21h formed with a predetermined layer thickness "d" by applying the elastomeric agent and hardening it as mentioned above. When the core member 29 of the bearing seal 26 is fitted to the outer ring 21 along the direction of the outlined arrow, the annular seal layers 21 g, 21h are interposed in a compressed state between the core member 29 and the outer ring 21.
Therefore, the fitting portion of the core member 29 and the outer ring 21 is sealed and dirty water and the like which have reached the outer circumference 21i of the outer ring 21 are prevented from entering the bearing space 20a through the fitting portion.

The bearing seal 26 in Fig. 11 is an axial seal type as mentioned above and has a core member 31 fitted to the outer circumference 21i of the outer ring 21 and an elastic seal lip member 32 having a plurality of seal lips 32a, 32b, 32c which elastically contact the wheel hub 23 and being integrally fixed to the core member 31. The core member 31 comprises a cylindrical part 31a fitted to the inner circumference 21 a of the outer ring 21 along the direction of the outlined arrow, an outward flange part 31b extending from the backward end part of the cylindrical part 31a in the fitting direction to the centrifugal direction, and an inward flange part 31 c extending from the forward end part of the cylindrical part 31a in the fitting direction to the centripetal direction.
The outward flange part 31b is formed so as to abut the wheel side end surface 21d of the outer ring 21 when the core member 31 is fitted to the outer ring 21, In the fitting relation of the core member 31 and the outer ring 21, the former corresponds to the annular member of the present invention and the latter corresponds to the member to be fitted of the present invention.

The inside corner 21e and the outside corner 21f of the wheel side end surface 21d of the outer ring 21 are planely chamfered and are provided with the annular seal layers 21 g, 21h formed with a predetermined layer thickness "d" by applying the elastomeric agent and hardening it as mentioned above. When the core member 31 of the bearing seal 26 is fitted to the outer ring 21 along the direction of the outlined arrow, the annular seal layers 21g, 21h in a compressed state are interposed between the core member 31 and the outer ring 21. Therefore, the fitting portion of the core member 31 and the outer ring 21 is sealed and dirty water and the like which have reached the outer circumference 21i of the outer ring 21 is prevented from entering the bearing space 20a through the fitting portion.

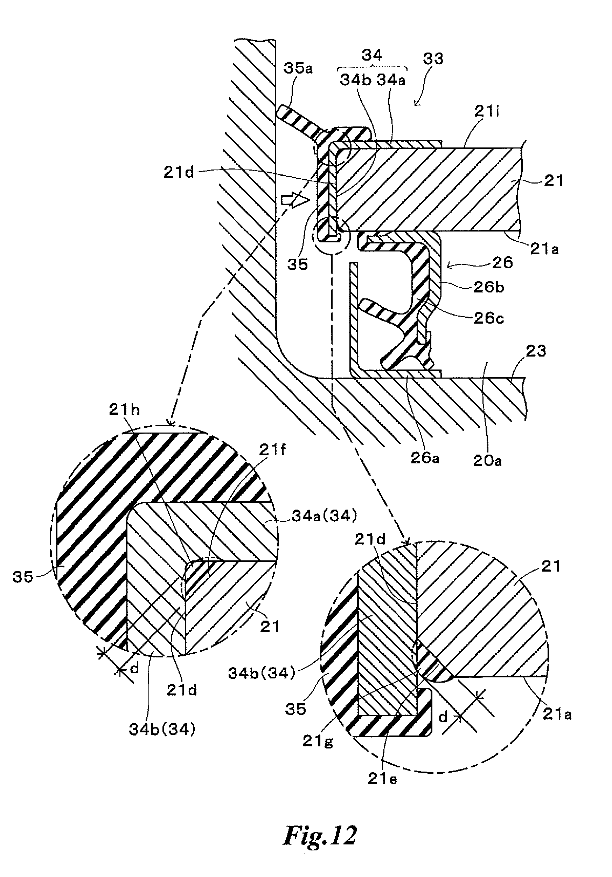

Fig. 12 shows an embodiment in which the bearing seal 26 shown in Fig. 8 is pack seal type, constitutes an oil seal in combination with an exterior seal 33 as another member, and the annular seal layer is applied to a fitting portion of the exterior seal 33 and the outer ring 21. The pack seal type bearing seal 26 is constituted in the same manner as the bearing seal 11 in Fig. 2 and comprises a slinger 26a fitted to the outer circumference of the wheel hub 23, a core member 26b fitted to the inner circumference 21a of the outer ring 21, and an elastic seal lip member 26c having a plurality of seal lips which elastically contact the slinger 26a and being fixedly integrated to the core member 26b.
The pack seal type bearing seal 26 is the same one as in the prior art and further explanation is omitted. It is possible to provide an annular seal layer which is interposed in the fitting portion in a compressed state for the slinger 26a and the core member 26b as mentioned above.

The exterior seal 33 comprises a core member 34 fitted to the outer circumference 21i of the outer ring 21 along the direction of the outlined arrow, and a seal lip member 35 having a seal lip 35a which elastically contacts or is close to a hub flange of the wheel hub 23 and being integrally fixed to the core member 34. The core member 34 comprises a cylindrical part 34a fitted to the outer circumference 21i of the outer ring 21, and an inward flange part 34b extending from the backward end part of the cylindrical part 34a in the fitting direction.
The inward flange part 34b is formed so as to abut or to be close to the automotive wheel side end surface 21 b of the outer ring 21 when the core member 34 is fitted to the outer ring 21. In the fitting relation of the core member 34 and the outer ring 21, the former corresponds to the annular member of the present invention and the latter corresponds to the member to be fitted of the present invention.

The inside corner 21e and the outside corner 21f of the wheel side end surface 21d of the outer ring 21 are planely chamfered and are provided with the annular seal layers 21g, 21h formed with a predetermined layer thickness "d" by applying the elastomeric agent and hardening it as mentioned above. When the core member 34 of the exterior seal 33 is fitted to the outer ring 21 along the direction of the outlined arrow, the annular seal layers 21g, 21h in a compressed state are interposed between the core member 34 and the outer ring 21.
Therefore, the fitting portion of the core member 34 and the outer ring 21 is sealed and dirty water and the like which have reached the outer circumference 21i of the outer ring 21 are prevented from entering the bearing space 20a through the fitting portion.

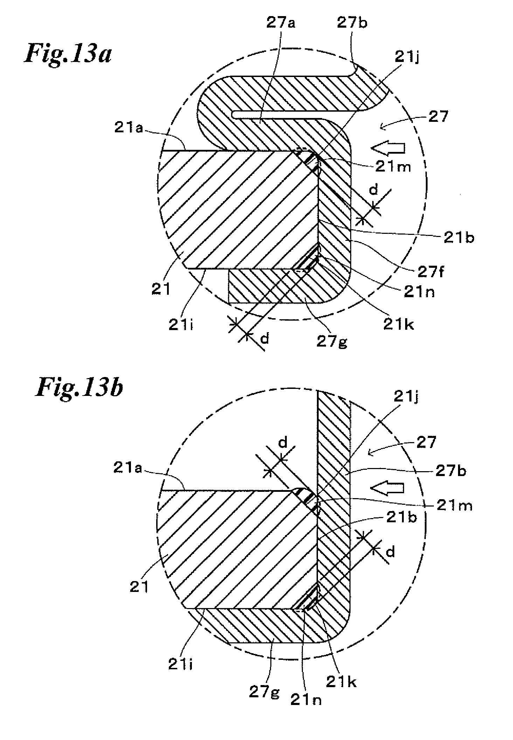

Fig. 13a and Fig. 13b show another embodiment in which a sealing structure for a fitting portion of the present invention is applied to a cap mounting part of the bearing device shown in Fig. 8 and correspond to an enlarged view in Fig. 8. The cap member 27 having the function as mentioned above comprises the cylindrical part 27a fitted to the inner circumference 21a of the outer ring 21, the cover plate part 27b which extends from one end of the cylindrical part 27a (the forward end part in the fitting direction along the outlined arrow) so as to be folded back and closes the opening of the cylindrical part 27a, an outward flange part 27f extending from the other end of the cylindrical part 27a (the backward end part in the fitting direction along the outlined arrow), and a second cylindrical part 27g extending from the outer circumferential end of the outward flange part 27f in parallel to or concentric with the cylindrical part 27a.
The second cylindrical part 27g is fitted to the outer circumference 21i of the outer ring 21. In such a fitting state, the outward flange part 27f abuts or is close to the automotive body side end surface 21b of the outer ring 21, In the fitting relation of the cap member 27 and the outer ring 21, the former corresponds to the annular member of the present invention and the latter corresponds to the member to be fitted of the present invention.

An inside corner 21j and an outside corner 21k of the automotive body side end surface 21b of the outer ring 21 are planely chamfered and are provided with annular seal layers 21 m, 21n formed with a predetermined layer thickness "d" by applying the elastomeric agent and hardening it as mentioned above. When the cylindrical parts 27a, 27g of the cap member 27 are fitted to the outer ring 21 along the direction of the outlined arrow, the annular seal layers 21m, 21n are interposed in a compressed state between the cap member 27 and the outer ring 21.
Therefore, the fitting portion of the cap member 27 and the outer ring 21 is sealed and dust, dirty water and the like are surely prevented from entering by the cap member 27. In this case, double cylindrical parts 27a, 27g of the cap member 27 are fitted to the outer ring 21 so as to sandwich the outer ring 21 from outside and inside, so that a sealing structure with outstanding sealing performance is obtained by the synergetic effect of the fitting state and the sealing function of the annular seal layers 21m, 21n.

In the embodiment shown in Fig. 13b, the cap member 27 comprises the cylindrical part 27g fitted to the outer circumference 21i of the outer ring 21 and the cover plate part 27b extending from one end of the cylindrical part 27g (the backward end part in the fitting direction along the outlined arrow) and closing the opening of the cylindrical part 27g.
When the cap member 27 is fitted to the outer ring 21, a part of the cover plate part 27b abuts or comes close to the automotive body side end surface 21b of the outer ring 21. In the fitting relation of the cap member 27 and the outer ring 21, the former corresponds to the annular member of the present invention, and the latter corresponds to the member to be fitted in the present invention.

The inside corner 21j and the outside corner 21k of the automotive body side end surface 21 b of the outer ring 21 are planely chamfered and are provided with the annular seal layers 21m, 21n formed with a predetermined layer thickness "d" by applying the elastomeric agent and hardening it as mentioned above. When the cylindrical part 27g of the cap member 27 is fitted to the outer ring 21 along the direction of the outlined arrow, the annular seal layers 21m, 21n are interposed in a fitted state between the cap member 27 and the outer ring 21. Therefore, the fitting portion of the cap member 27 and the outer ring 21 is sealed and dust and dirty water are surely prevented from entering by the cap member 27.

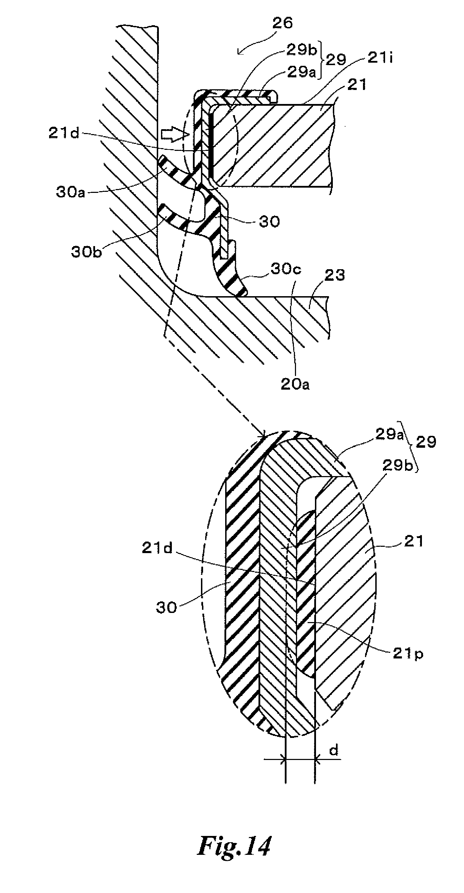

Fig. 14 shows another modification of the embodiment shown in Fig. 10. The structure of the bearing seal 26 and the fitting structure to the outer ring 21 are the same as those in the embodiment shown in Fig. 10. They are different in that an annular seal layer 21p is formed on the wheel side end surface 21 d of the outer ring 21 with a predetermined layer thickness "d" by applying the elastomeric agent and hardening it as mentioned above.
Therefore, when the core member 29 of the bearing seals 26 is fitted to the outer ring 21 along the direction of the outlined arrow, the annular sea layer 21p is interposed in a compressed state between the core member 29 and the outer ring 21. Therefore, the fitting portion of the core member 29 and the outer ring 21 is sealed and dirty water and the like which have reached the outer circumference 2li of the outer ring 21 are prevented from entering the bearing space 20a through the fitting portion. Formation of the annular seal layer 21p shown in Fig. 14 can be applied to the embodiments in Fig. 11 to Fig. 13

The sealing structure for a fitting portion of the present invention is not limited to the exemplified embodiments. The sealing structure for a fitting portion of the present invention can be applied to fitting members which require sealing performance between the annular member and the member to be fitted. For example, the present invention can be applied to such a case that the member to be fitted is a shaft and a slinger as the annular member is directly fitted to the shaft.
Although the embodiment in Fig. 2 shows that the magnetic encoder 12 is attached to the slinger 14, the magnetic encoder 12 may not be provided. Furthermore, in the embodiments in Fig. 2 and Fig. 7, the slinger 14 can be integrated with the seal lip and the seal lip can elastically contact the core member 15.
In addition, the annular seal layers in Fig. 10 to Fig. 13 are formed at both corners at the ends of the outer ring; however, it can be provided on either one of them. In the embodiments in Fig. 10 to Fig. 14, the annular seal layer is formed on the member to be fitted; however, it is possible that the annular seal layer is formed at a predetermined portion on the annular member, instead of the member to be fitted, corresponding to the position where the annular seal layer is formed in the sealing structures in the embodiments. The shape of the part where the annular seal layer is formed in the embodiments shown in Fig. 10 to Fig. 13 is not limited to be planely chamfered and other shape can be applied.

### List of Reference Signs

- 6: inner ring member (member to be fitted)
- 8: outer ring (member to be fitted)
- 11: bearing seal (oil seal)
- 14: slinger (annular member)
- 14a: cylindrical part
- 14b: flange part
- 14c: part where annular seal layer is formed
- 14d: annular seal layer
- 15: core member (annular member)
- 15a: cylindrical part
- 15c: part where annular seal layer is formed
- 15d: annular seal layer
- 16a, 16b, 16c: seal lip
- 17: protective cover (annular member, member to be fitted)
- 17a: cylindrical part
- 17c: part where annular seal layer is formed
- 17d: annular seal layer
- 21: outer ring (member to be fitted)
- 21e, 21f: part where annular seal layer is formed
- 21j, 21 k: part where annular seal layer is formed
- 21 g, 21 h: annular seal layer
- 21m, 21 n: annular seal layer
- 21 p: annular seal layer
- 27a, 27g: cylindrical part of cap member (annular member)
- 21c 21e: part where annular seal layer is formed
- 27d: annular seal layer
- d: layer thickness

## Claims

1. A sealing structure for a fitting portion where a cylindrical part of an annular member is concentrically fitted to a cylindrical member to be fitted:
wherein an elastic annular seal layer is integrally formed on a backward end part of the annular member or the cylindrical member in fitting direction by applying an elastomeric agent to the backward end part and hardening it; and
wherein the elastic annular seal layer is formed such that it has a layer thickness of 5 µm to 1 mm and is interposed in a compressed state between the annular member and the cylindrical member when the annular member is fitted to the cylindrical member.

2. The sealing structure for the fitting portion according to claim 1,
wherein an elastomeric agent with a viscosity equal to or higher than 20 Pa·S in an application process is used as the elastomeric agent for forming the annular seal layer.

3. The sealing structure for the fitting portion according to claim 1 or 2,
wherein the annular seal layer has a convex sectional shape in its attached part.

4. The sealing structure for the fitting portion according to claim 1 or 2,
wherein the annular seal layer has a plane chamfered sectional shape in its attached part.

5. The sealing structure for the fitting portion according to claim 1 or 2,
wherein the annular seal layer has a concave sectional shape in its attached part.

6. The sealing structure for the fitting portion according to claim 1 or 2,
wherein the annular seal part has a stepped cut sectional shape in its attached part.

7. The sealing structure for the fitting portion according to any one of claims 1 to 6,
wherein the annular member is a slinger of a seal member and comprises a cylindrical part and a flange part extending from one end of the cylindrical part; and
wherein an elastic contacting surface for a seal lip of the seal member is formed at a surface of the annular member opposite to the fitting portion and at one surface of the flange part extending therefrom.

8. The sealing structure for the fitting portion according to claim 7,
wherein the annular seal layer is formed on the backward end part of the annular member in the fitting direction and a surface area which the seal lip does not contact is formed at a surface opposite to an area where the annular seal layer is formed.
